# EUROPEAN PATENT SPECIFICATION

(11) **EP 2 467 981 B1**
(45) Date of publication and mention of the grant of the patent: **24.10.2018**
(21) Application number: 10810173.4
(22) Date of filing: 19.08.2010
(51) Int. Cl.: H04L 12/66, H04L 12/24

(54) **TECHNIQUES FOR CONTROLLING GATEWAY FUNCTIONALITY TO SUPPORT DEVICE MANAGEMENT IN A COMMUNICATION SYSTEM**
VERFAHREN ZUR STEUERUNG EINER GATEWAY-FUNKTIONALITÄT FÜR UNTERSTÜTZTES GERÄTEMANAGEMENT IN EINEM KOMMUNIKATIONSSYSTEM
TECHNIQUES DE COMMANDE DE FONCTIONNALITÉ DE PASSERELLE POUR PRENDRE EN CHARGE UNE GESTION DE DISPOSITIF DANS UN SYSTÈME DE COMMUNICATION

(30) Priority: 19.08.2009 US 235314 P; 29.07.2010 US 846661
(43) Date of publication of application: 27.06.2012
(73) Proprietor: Samsung Electronics Co., Ltd., Suwon-si, Gyeonggi-do, 443-742 (KR)
(72) Inventor: BHAT, Kong Posh, Texas 75025 (US)
(74) Representative: HGF Limited
(86) International application number: PCT/KR2010/005493
(87) International publication number: WO 2011/021865

(56) References cited:
- EP-A1- 1 940 079
- EP-A2- 1 365 557
- WO-A2-2005/091218
- US-A- 5 742 762
- US-A1- 2003 200 285
- US-A1- 2006 067 209
- US-A1- 2006 104 214
- US-A1- 2009 092 051

## Description

### Technical Field

The present invention relates to Device Management (DM) in a communication system. More particularly, the present invention relates to techniques for controlling gateway functionality to support DM in a communication system.

### Background Art

With the growth in ubiquitous communications technologies and systems, devices are increasing in functionality and complexity. However, with the increase in the functionality and complexity of the devices, a need for the management of the devices has developed. To address that need, the Open Mobile Alliance (OMA) established a Device Management (DM) Working Group to specify protocols and mechanisms that achieve management of devices. The OMA DM Working Group has developed the OMA-DM specification, which defines a two-way protocol between a DM server and a DM client associated with a device that is used for remote management of the device. An instance of an association between a DM Sever and a DM client is referred to as a DM session and may be initiated by either the DM client or the DM server. The DM client resides in the device and the DM server manages the device by invoking commands on the DM client. The DM client processes the command and sends a response back to the DM server. Communication between the server and the client comprises exchange of Synchronization Markup Language (SyncML) messages. Historically, the devices have been wireless devices, but of late, OMA-DM has begun addressing the remote management needs of wired devices as well. Examples of OMA-DM include the setting of initial configuration information in devices, the subsequent installation and update of persistent information in devices, the retrieval of management information from devices, and the processing of events and alarms generated by devices.

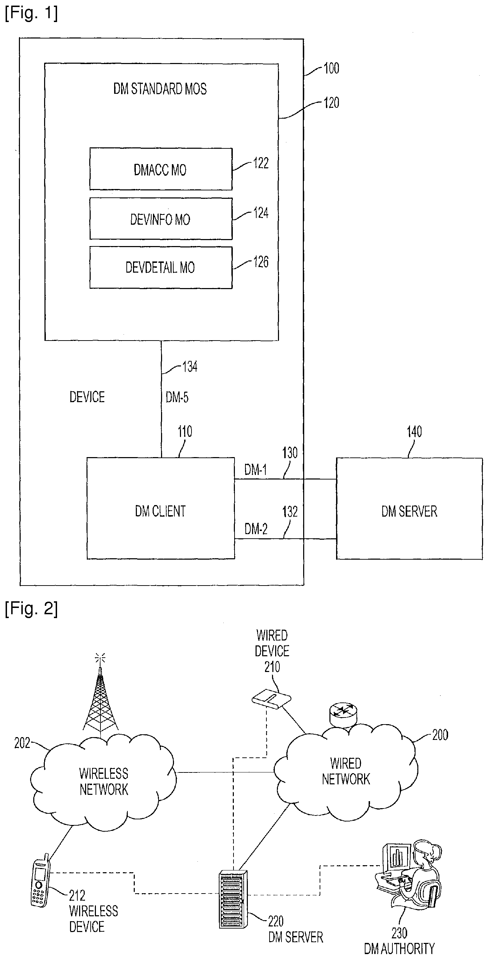

An example of the OMA-DM architecture is described below with reference to FIG. 1.

FIG. 1 illustrates an OMA-DM architecture according to the related art.

Referring to FIG. 1, the OMA-DM architecture includes a DM server 140, a DM client 110 and DM standard Management Objects (MOs) 120. The DM client 110 and the DM standard MOs 120 are co-located in a device 100. The OMA-DM architecture may include additional structural elements. However, a description of additional structural elements of the OMA-DM architecture is omitted for conciseness.

The DM server 140 and DM client 110, which have been described above, communicate via interfaces DM-1 130 and DM-2 132. DM client 110 communicates via interface DM-5 134 with the DM Standard MOs 120.

The DM protocol defines three standard Management Objects (MOs) 120 that all implementations of a DM client 110 must support. These DM standard MOs 120 include DM Account (Acc) MO 122, Device Information (Devlnfo) MO 124 and Device Details (DevDetail) MO 126.

The DM Acc MO 122 is used to manage information pertaining to bootstrapped DM servers 140. For each DM server 140 that has been successfully bootstrapped for DM device 110, the DM Acc MO 122 maintains information on a DM server IDentifier (ID), connectivity information, server address, server and client credentials, etc. The Devlnfo MO 124 provides basic information about the device 100 associated with the DM client 110. The basic information includes a device ID, a device manufacturer ID, a model ID, and language settings. The DevDetail MO 126 provides additional information about the device 100 associated with the DM client 110. The additional information includes device type, Original Equipment Manufacturer (OEM), hardware version, firmware version, software version, an indication of whether the device 100 supports optional features (e.g., large-object handling capability), maximum depth of the management tree, maximum total length of any Uniform Resource ID (URI), and maximum total length of any URI segment.

An example of a communication system employing OMA-DM is described below with reference to FIG. 2.

FIG. 2 illustrates an exemplary communication system employing OMA-DM according to the related art.

Referring to FIG. 2, the exemplary communication system employing OMA-DM may include a wired network 200, a wireless network 202, a wired device 210, a wireless device 212, a DM server 220, and a DM authority 230. Each of the wired device 210 and the wireless device 212 has associated therewith a DM client (not shown). In addition, the DM authority 230 may be an Operations Support System (OSS). In FIG. 2, solid lines represent physical connectivity and dotted lines represent logical connectivity.

The exemplary communication system employing OMA-DM illustrated in FIG. 2 is merely one of a number of possible implementations. For example, one of the wired network 200 and the wireless network 202 may be omitted. Alternatively, the wired network 200 and the wireless network 202 may be combined. Further, while the DM server 220 and the DM authority 230 are shown as connected to the wired network 200, one or both of the DM server 220 and the DM authority 230 may alternatively be connected to the wireless network 202.

To facilitate OMA-DM in the communication system illustrated in FIG. 2, a two-way protocol based on the OMA-DM specification is utilized between the DM server 220 and the DM client associated with wireless device 212, and between the DM server 220 and the DM client associated with the wired device 210. The DM authority 230 may direct the DM operations of the DM client associated with each of the wired device 210 and wireless device 212 via the DM server 220. Only the interaction between the DM server 220 and a DM client associated with each of the wired device 210 and wireless device 212, is within the scope of the OMA-DM specification.

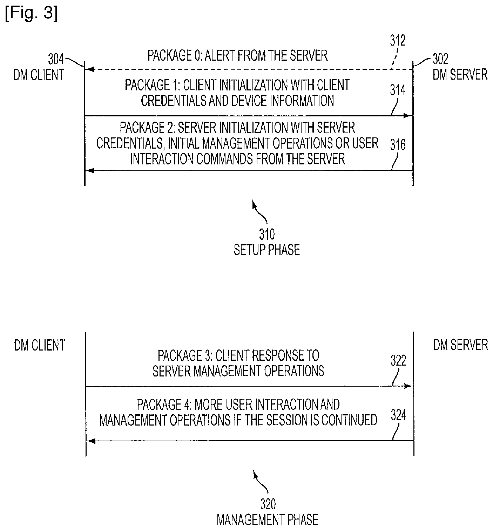

An example of a DM server initiated DM session with a DM client is described below with reference to FIG. 3.

FIG. 3 is a signal diagram for a DM server initiated DM session with a DM client in a communication system according to the related art.

Referring to FIG. 3, the DM server initiated DM session between a DM server 302 and a DM client 304 includes two phases. The first phase is a setup phase 310 and the second phase is a management phase 320. The setup phase 310 includes an exchange of information for authentication and device information. The exchange of information in the setup phase 310 includes three packages, each of which may contain multiple messages, namely Package 0 (312), Package 1 (314), and Package 2 (316). Package 0 (312) is sent from DM server 302 to DM client 304 and is referred to as a Notification Message. Package 1 (314) is sent from DM client 304 to DM server 302. Package 1 (314) includes client initialization information and device information. The client initialization information includes client credentials. Package 2 (316) is sent from DM server 302 to DM client 304. Package 2 (316) includes server initialization information and an initial management operation. The server initialization information includes one or more server credentials.

The management phase 320 includes the exchange of two packages, namely Package 3 (322), and Package 4 (324). Package 3 (322) is sent from DM client 304 to DM server 302. Package 3 (322) includes client response information to the management operation triggered by Package 2 (316). Package 4 (324) is sent from DM server 302 to DM client 304. Package 4 (324) includes at least one of an additional management operation and one or more additional user interaction commands, if the DM session is continued beyond the Package 2 message 316. Additional cycles of a Package 3 message 322 and a Package 4 message 324 may be transmitted between the DM server 302 and DM client 304 until the DM session is terminated.

The currently deployed version of OMA-DM standard is version 1.2.1. The OMA-DM Working Group is currently developing two new versions of the DM protocol, namely OMA-DM version 1.3 and OMA-DM version 2.0. OMA-DM version 1.3 is being developed to address some of the security vulnerabilities in OMA-DM version 1.2.1.

US2006/00672009 A1 discloses a universal configurable device gateway for providing a configurable object-orientated, protocol-neutral interface between a physical device and a server.

EP1940079 A1 discloses a communication device and a system for managing local devices remotely where a remote management server has knowledge of the condition of the network organization and can optimize the configuration of based on the topology of the local network.

US2003/0200285 A1 discloses a technique for configuring a network gateway, where the gateway obtains data relating to a device and transmits it to a server, and the server provides the gateway with configuration information that is generated based on the data.

US5742762 discloses a network management gateway which uses a Web client to provide a unified, remote, graphical, transparent interface for Web users, working at a Web client, to a variety of managed networks.

### Disclosure of Invention

### Technical Problem

However, the development of newer versions of OMA-DM poses some new challenges, which need to be addressed by the DM Working Group. For example, unlike OMA-DM version 1.2.1, devices managed by the new OMA-DM versions may not have a globally routable address. The main reason for this is that for security reasons many of the devices being targeted in the new OMA-DM versions may be deployed behind a device that provides Network Address Translation (NAT) and/or firewall functionality. Additionally, many of the devices may be nomadic and their address is controlled by the network that they are deployed in. Another challenge posed by the new OMA-DM versions is that some of the devices may not have an embedded OMA-DM client.

A gateway device is being investigated in order to address some of the challenges described above. A gateway device is an entity that facilitates interaction between a DM server and a DM client, at least one of which runs OMA-DM, in situations where direct and unaided interaction between the DM server and the DM client is not possible.

Unlike in the current OMA-DM paradigm, the gateway device is expected to play a major role in the management of devices in the new OMA-DM versions. Accordingly, a Gateway MO (GwMO) Enabler is being developed for use with the new OMA-DM versions.

Therefore, a need exists for techniques for controlling gateway functionality to support DM in a communication system.

### Solution to Problem

An aspect of the present invention is to address at least the above-mentioned problems and/or disadvantages and to provide at least the advantages described below. Accordingly, an aspect of the present invention is to provide techniques for controlling gateway functionality to support Device Management (DM) in a communication system.

In accordance with an aspect of the present invention, a method as in claim 1 for operating a DM gateway in a communication system including the DM gateway, a DM server, and a device is provided. The method includes detecting, by the DM gateway, a new manageable device, determining, by the DM gateway, one or more characteristics of the device, and invoking, by the DM gateway, an algorithm based on the determined one or more characteristics of the device, wherein the DM gateway operates according to the invoked algorithm, so that the DM Server can subsequently manage the device, by sending management commands to the device, via the DM gateway, and by processing alerts received from the device, via the DM gateway, wherein the one or more characteristics of the device comprise at least one of a first characteristic of whether the device is configured for a proxy connection with the DM server, and a second characteristic of whether the device is configured for DM gateway bypass. In accordance with another aspect of the present invention, a Device Management (DM) gateway (1302), as in claim 15, for operation in a communication system including the DM gateway, a DM server, and a device, the DM gateway comprising a computer-readable recording medium storing instructions causing a processor to execute the above-described method is provided.

In accordance with an example of the present disclosure, a method for operating a DM gateway in a communication system including the DM gateway, a DM server, and a device is provided. The method includes receiving, by the DM gateway, a service/capability advertisement message from the device, determining, by the DM gateway, whether the device supports a DM protocol used by the DM server based on the service/capability advertisement message, if it is determined that the device does not support the DM protocol used by the DM server, determining if an Inform DM Server flag for the device is set to true in a Gateway Configuration (Config) Management Object (MO), and if it is determined that the Inform DM Server flag for the device is set to true, attempting communication with DM server on behalf of device and updating a DM sever connectivity attribute for device in a Local Area Network (LAN) Device Inventory MO.

In accordance with yet another example of the present disclosure, a method for a DM gateway in a communication system to update the bootstrapping information for a certain class of devices is provided. The method includes receiving, by the DM gateway, updated bootstrapping information for a certain class of devices, updating, by the DM gateway, the bootstrapping information for the certain class of devices, and searching, by the DM gateway, a LAN Device Inventory MO for devices whose device type matches the device type in the updated bootstrap message.

In accordance with still another example of the present disclosure, a method for a DM gateway in a communication system to process DM commands is provided. The method includes receiving, by the DM gateway, a DM command for a device from a DM server, determining, by the DM gateway, if there is an entry for the device in a LAN Device Inventory MO, if it is determined that the there is an entry for the device in the LAN Device Inventory MO, transmitting, by the DM gateway, the DM command to the device and waiting for a response within a predefined time, and if the response is received within the predefined time, transmitting, by the DM gateway, the response to the DM server.

In accordance with another example of the present disclosure, a method for a DM gateway in a communication system to process trap messages is provided. The method includes receiving, by the DM gateway, a trap message from a device, determining, by the DM gateway, if there is an entry for the device in a LAN Device Inventory MO, if it is determined that there is not an entry for the device in the LAN Device Inventory MO, invoking, by the DM gateway, one of a Proxy Server Role and a Protocol Adaption Role, and determining, by the DM gateway, if there is destination information identifying a DM server in the received trap message, if it is determined that the there is an entry for the device in the LAN Device Inventory MO, determining, by the DM gateway, if there is destination information identifying the DM server in the received trap message, and if it is determined that the there is destination information in the received trap message identifying the DM server, transmitting the trap message to the DM server identified in the destination information.

In accordance with yet another example of the present disclosure, a method for a DM gateway in a communication system to process a periodic service/capability advertisement message is provided. The method includes receiving, by the DM gateway, a periodic service/capability advertisement message from a device, and resetting, by the DM gateway, a validity time for the device in a LAN Device Inventory MO.

In accordance with still another example of the present disclosure, a method for a DM gateway in a communication system to process a heartbeat timeout is provided. The method includes determining, by the DM gateway, that a heartbeat timer elapses, and when it is determined that the heartbeat timer elapses, deleting, by the DM gateway, entries of devices in a LAN Device Inventory MO that have a validity time that has elapsed.

Other aspects, advantages, and salient features of the invention will become apparent to those skilled in the art from the following detailed description, which, taken in conjunction with the annexed drawings, discloses exemplary embodiments of the invention.

### Advantageous Effects of Invention

An aspect of the present invention is to provide techniques for controlling gateway functionality to support Device Management (DM) in a communication system.

### Brief Description of Drawings

The above and other aspects, features, and advantages of certain exemplary embodiments of the present invention will be more apparent from the following description taken in conjunction with the accompanying drawings, in which:
FIG. 1 illustrates an Open Mobile Alliance (OMA) - Device Management (DM) architecture according to the related art;
FIG. 2 illustrates an exemplary communication system employing OMA-DM according to the related art;
FIG. 3 is a signal diagram for a DM server initiated DM session with a DM client in a communication system according to the related art;
FIG. 4 is a flowchart for initial service/capability advertisement message processing according to an exemplary embodiment of the present invention;
FIG. 5 is a flowchart for a Bootstrap Server Role algorithm according to an exemplary embodiment of the present invention;
FIG. 6 is a flowchart for a Proxy Server Role algorithm according to an exemplary embodiment of the present invention;
FIG. 7 is a flowchart of functionality executed on a DM gateway for realizing a Protocol Adaption Role algorithm according to an exemplary embodiment of the present invention;
FIG. 8 is a flowchart for updating the bootstrap information for a certain device type according to an exemplary embodiment of the present invention;
FIG. 9 is a flowchart for processing DM commands at a DM gateway that are destined for end-user devices, in a case where the DM gateway is in a Proxy Server Role or a Protocol Adaptation Role, according to an exemplary embodiment of the present invention;
FIG. 10 is a flowchart for processing trap messages at a DM gateway according to an exemplary embodiment of the present invention;
FIG. 11 is a flowchart for processing periodic service/capability messages at a DM gateway according to an exemplary embodiment of the present invention;
FIG. 12 is a flowchart for processing a Heartbeat Timeout message at a DM gateway according to an exemplary embodiment of the present invention;
FIG. 13 is a block diagram of a DM gateway according to an exemplary embodiment of the present invention.

Throughout the drawings, like reference numerals will be understood to refer to like parts, components, and structures.

### Mode for Invention

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention described below relate to techniques for Device Management (DM) in a communication system. More particularly, exemplary embodiments of the present invention described below relate to techniques for controlling gateway functionality to support DM in a communication system. While the techniques for controlling gateway functionality to support DM in a communication system may be described below in the context of Open Mobile Alliance (OMA)-DM version 2.0 (hereafter referred to as DM 2.0) and/or the Gateway Management Object (GwMO) Enabler, the present invention is similarly applicable to other DM or other OMA-DM versions and enablers. Hereafter, a gateway device to support DM in a communication system is referred to as a DM gateway.

It is noted that when the term "device" is referred to, the term "device" may be inclusive of an associated DM client running on the device. Further, it is noted that while exemplary embodiments of the present invention are described in the context of a single DM server and a single device for a given DM gateway, any number of DM servers and/or devices may be utilized with the given DM gateway. While the DM gateway may be physically located anywhere in a communication system, preferably, the DM gateway is logically disposed between a DM server and a device.

It should be understood that the following description may refer to terms utilized in various standards merely for simplicity in explanation. For example, the following description may refer to terms utilized in one of the OMA standards, such as the OMA-DM standard. However, this description should not be interpreted as being limited to such standards. Independent of the mechanism used to control gateway functionality to support DM in a communication system, it is advantageous for that ability to conform to a standardized mechanism.

Described below are various roles of a DM gateway and functionalities of new Management Objects (MOs), according to exemplary embodiments of the present invention.

### DM Gateway Roles

A DM gateway can play any of a number of roles, including a Bootstrap Server Role, a Proxy Server Role, and a Protocol Adaptation Role. In the Bootstrap Server Role, the DM gateway is responsible for bootstrapping a DM client on a device (i.e., establishing the connection between a DM server and a DM client associated with the device). Among other things, the Bootstrap Server Role may entail mapping the local transport address of the device to its Wide Area Network (WAN) address. Herein, it is noted that a Local Area Network (LAN) address of the device may not be routable on the WAN. Once the connection between the DM server and the DM client associated with the device is established, the DM gateway does not play any further role in the management of the device.

In the Proxy Server Role, all communication between the end-user device and the DM server occurs via the DM gateway. Here, the DM gateway acts as the DM server for the device and the DM gateway communicates with external DM servers on behalf of the device.

In the Protocol Adaptation Role, the DM gateway provides the Proxy Server functionality described above. Additionally, the DM gateway adapts between the native management protocol of the device and the OMA-DM protocol, which is utilized by the DM server.

In the exemplary embodiments of the present invention, it is assumed that the device issues a service/capability advertisement message, which is received by the DM gateway. Herein, the term service/capability advertisement message is intended to be inclusive of any message sent by the device that advertises a service and/or a capability, or any message that performs a similar function. The service/capability advertisement message may be issued upon power-on of the device and/or at periodic intervals. The details of a mechanism for discovering a device or a service is outside the scope of this disclosure and thus is omitted for brevity.

### New MO Functionalities

To account for the different roles that the DM gateway may operate in, new MO functionalities are provided according to exemplary embodiments of the present invention. The new MO functionalities are exemplified herein by new MOs, which include a Gateway Configuration (Config) MO and a LAN Device Inventory MO. The terms "Config MO" and "LAN Device Inventory MO" are merely used for convenience in explanation and may vary depending on the nomenclature adopted by a standardization body. Also, while the Config MO and LAN Device Inventory MO are described herein as separate MOs for convenience in explanation, their collective functionality may be distributed among a different number of MOs and/or all or part of their collective functionality may be included in other MOs. These new MOs focus on the functional capabilities that the DM Gateway needs to support, while leaving many details like device discovery, LAN/WAN address mapping, management protocol adaptation, etc. to the particular implementation.

The functionality of the Gateway Config MO is to maintain DM Account (Acc) Profiles for different types of devices. Each DM Acc Profile includes information that is similar to what is included in the corresponding DM Acc MO. The information includes a DM server IDentifier (ID), a DM server address, and Credentials. Each DM Acc Profile has a unique ID and multiple devices can share the same DM Acc Profile. Each DM Acc Profile may be specific to a certain device type. For each device type, the Gateway Config MO may include a Boolean flag to indicate whether or not the DM server(s) should be contacted upon detecting a new device of a specified type. The DM server has Read-Write access to the Gateway Config MO.

The functionality of the LAN Device Inventory MO is to maintain a list of devices that are in the LAN that are discovered by the DM gateway. As mentioned above, the mechanism for device discovery by the DM gateway is left to the particular implementation. Unlike the Gateway Config MO, the DM server may only have Read-Only access to the LAN Device Inventory MO. The LAN Device Inventory MO is populated by the DM client running on the DM gateway, when the DM gateway discovers new devices in the LAN. Examples of information that the LAN Device Inventory MO may maintain about each device discovered in the LAN include one or more of:
- Device type and/or device sub-type
- Device hardware address (i.e., Media Access Control (MAC) address, International Mobile Equipment Identity (IMEI), Mobile Equipment ID (MEID), etc.)
- DM Acc Profile ID
- Role played by the DM gateway for this device (i.e., Bootstrap Server, Proxy Server, or Protocol Adaptation)
- Validity Expiration Time (i.e., time after which the device entry will be removed from the inventory, unless a new Heartbeat Timeout message is received by the DM gateway)
- Mapping between WAN and LAN side addresses of the device (only for Bootstrap Server Role)
- Status of DM server connectivity (i.e., whether or not connection with the DM server(s) has been successfully established)
- Pending DM transaction information

### DM Gateway Functionality Using Exemplary New MOs

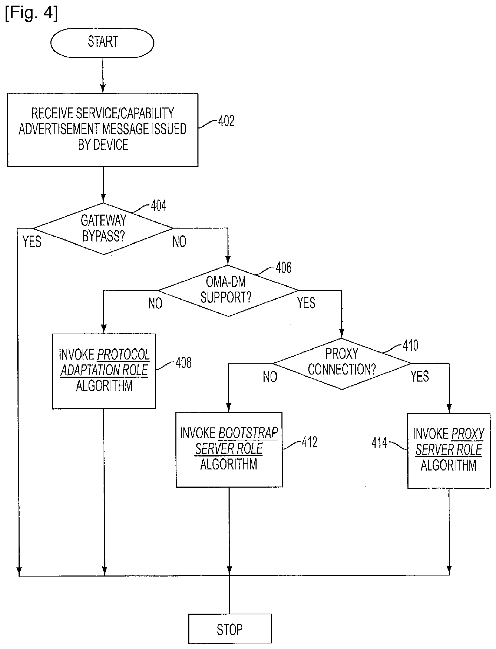

Hereafter, exemplary embodiments of the present invention will be described below that include DM gateway functionality using the functionality of the exemplary new MOs described above. The context for the various roles played by the DM gateway device will be described below with reference to FIG. 4.

FIG. 4 is a flowchart for initial service/capability advertisement message processing according to an exemplary embodiment of the present invention.

Referring to FIG. 4, the DM gateway receives a service/capability advertisement message from a device in step 402. It is noted that service/capability advertisement messages may be issued by devices periodically. Here, it is assumed that the service/ capability advertisement message received in step 402 is the first service/capability advertisement message.

In step 404, the DM gateway determines if the device is directly connected to the DM server and thus bypasses the DM gateway. Here, the DM gateway may determine if the device is directly connected to the DM server by checking information included in the service/capability advertisement message. Further, it is noted that devices that are directly connected to the DM server (i.e., devices that bypasses the DM gateway) may not issue a service/capability advertisement message. Also, for devices that are directly connected to the DM server, the DM gateway may not be aware of such devices in the LAN. If the DM gateway determines that the device is directly connected to the DM server, and thus bypasses the DM gateway, the process ends. In contrast, if the DM gateway determines that the device is not directly connected to the DM server, and thus does not bypasses the DM gateway, the process proceeds to step 406.

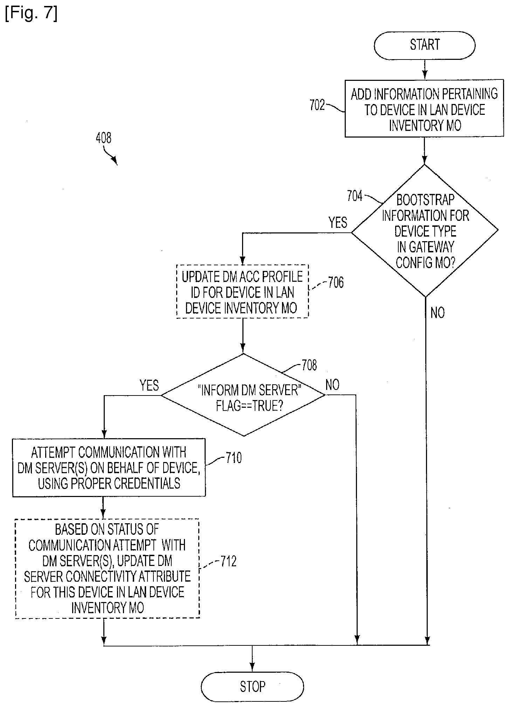

In step 406, the DM gateway determines if the device supports OMA-DM. Here, the DM gateway may determine if the device if the device supports OMA-DM by checking information included in the service/capability advertisement message. If the DM gateway determines that the device does not support OMA-DM, the DM gateway invokes the Protocol Adaptation Role algorithm in step 408. Thereafter, the process ends. The Protocol Adaptation Role algorithm is described in more detail below with reference to FIG. 7. In contrast, if the DM gateway determines that the device does support OMA-DM, the process proceeds to step 410.

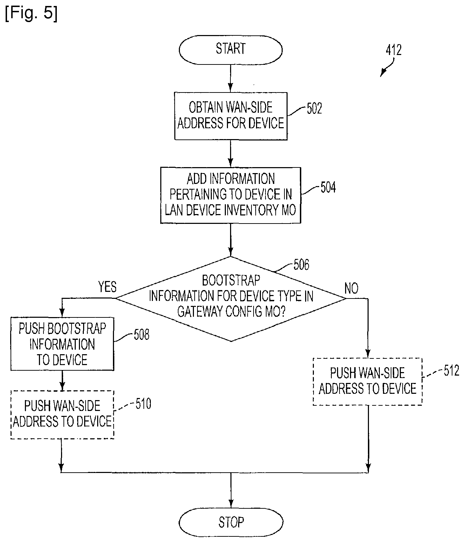

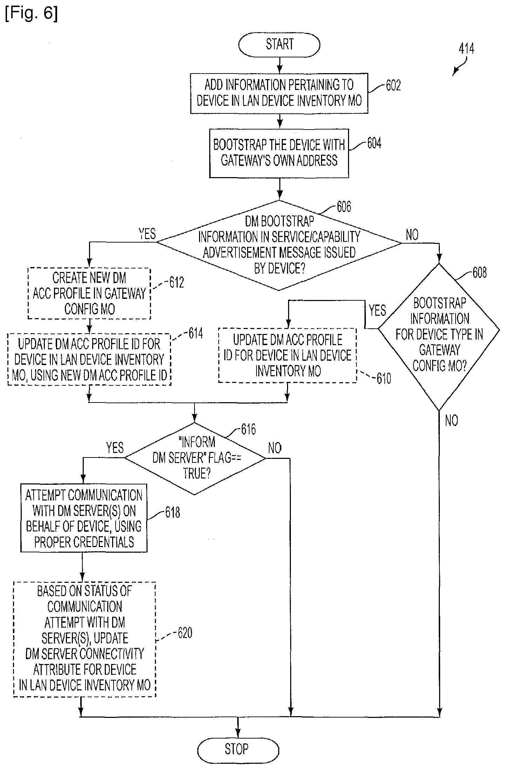

In step 410, the DM gateway determines if the device is configured for a proxy connection to the DM server. Here, the DM gateway may determine if the device is configured for a Proxy Connection to the DM server by checking information included in the service/capability advertisement message. If the DM gateway determines that the device is not configured for a proxy connection to the DM server, the DM gateway invokes the Bootstrap Server Role algorithm in step 412. Thereafter, the process ends. The Bootstrap Server Role algorithm is described in more detail below with reference to FIG. 5. In contrast, if the DM gateway determines that the device is configured for a proxy connection to the DM server, the DM gateway invokes the Proxy Server Role algorithm in step 414. Thereafter, the process ends. The Proxy Server Role algorithm is described in more detail below with reference to FIG. 6.

Herein, it is noted that the steps of the flowchart of FIG. 4 may be invoked in any order. The Bootstrap Server Role of the DM gateway will be described below with reference to FIG. 5.

FIG. 5 is a flowchart for a Bootstrap Server Role algorithm according to an exemplary embodiment of the present invention.

Referring to FIG. 5, the DM gateway obtains the WAN-side address for the device in step 502. The DM gateway may resort to any known Network Address Translation (NAT) traversal scheme, such as Simple Traversal of User Datagram Protocol through NATs (STUN), Traversal Using Relay NAT (TURN), etc. or may use a proprietary scheme for this purpose.

In step 504, the DM gateway adds information pertaining to the device to the LAN Device Inventory MO. In step 506, the DM gateway determines if the Gateway Config MO has bootstrap information for this device type. If the DM gateway determines that the Gateway Config MO has bootstrap information for this device type, the process proceeds to step 508. In step 508, the DM gateway forwards the bootstrap information to the device. In step 510, the DM gateway may forward the device's WAN-side address to the device. Thereafter, the process ends. In contrast, if the DM gateway determines that the Gateway Config MO does not have bootstrap information for this device type, the process proceeds to step 512. In step 512, the DM gateway may forward only the WAN-side address to the device. Thereafter, the process ends.

Herein, steps 510 and 512 are optional and thus one or more of steps 510 and 512 may be omitted. When one or more of steps 510 and 512 are omitted the process proceeds to the next step.

The Proxy Server Role of the DM gateway will be described below with reference to FIG. 6.

FIG. 6 is a flowchart for a Proxy Server Role algorithm according to an exemplary embodiment of the present invention.

Referring to FIG. 6, the DM gateway adds information pertaining to the device in the LAN Device Inventory MO in step 602. In step 604, the DM gateway proceeds to DM bootstrap the device with the DM gateway's own address. In step 606, the DM gateway determines if the service/capability advertisement message issued by the device contains any bootstrap information. If the DM gateway determines that the service/capability advertisement message issued by the device does not contain any bootstrap information, the process proceeds to step 608.

In step 608, the DM gateway determines if the DM Bootstrap information for this device type is in the Gateway Config MO. If the DM gateway determines that the DM Bootstrap information for this device type is not in the Gateway Config MO, the process ends. In contrast, if the DM gateway determines that the DM Bootstrap information for this device type is in the Gateway Config MO, the process proceeds to step 610. In step 610, the DM gateway may update the entry for the device in the LAN Device Inventory MO with the correct DM Acc Profile ID, as provided by the Gateway Config MO. Thereafter, the process proceeds to step 616, which is described further below.

Returning to step 606, if the DM gateway determines that the service/capability advertisement message issued by the device does contain bootstrap information, the process proceeds to step 612. In step 612, the DM gateway may create a new DM Acc Profile in the Gateway Config MO. In step 614, the DM gateway may update the device entry in the LAN Device Inventory MO with the new DM Acc Profile ID. Thereafter, the process proceeds to step 616.

In step 616, the DM gateway determines if an "Inform DM Server" flag for the device type in question is true. If the DM gateway determines that the flag is not set to true, the process ends. In contrast, if the DM gateway determines that the flag is set to true, the DM gateway attempts communication with DM server(s) on behalf of the device, using the proper credentials, in step 618. In step 620, the DM gateway may update the DM server connectivity attribute for this device in the LAN Device Inventory MO, based on the status of the communication attempt with the DM server(s), in step 610. Thereafter, the process ends.

Herein, steps 610-614 and 620 are optional and thus one or more of steps 610-614 and 620 may be omitted. When one or more of steps 610-614 and 620 are omitted the process proceeds to the next step.

The Protocol Adaption Role of the DM gateway will be described below with reference to FIG. 7.

FIG. 7 is a flowchart of functionality executed on a DM gateway for realizing a Protocol Adaption Role algorithm according to an exemplary embodiment of the present invention.

Referring to FIG. 7, the DM gateway adds information pertaining to the device in the LAN Device Inventory MO in step 702. In step 704, the DM gateway determines if the DM Bootstrap information for this device type is in the Gateway Config MO. If the DM gateway determines that the DM Bootstrap information for this device type is not in the Gateway Config MO, the process ends. In contrast, if the DM gateway determines if the DM Bootstrap information for this device type is in the Gateway Config MO, the process proceeds to step 706. In step 706, the DM gateway may update the entry for the device in the LAN Device Inventory MO with the correct DM Acc Profile ID, as provided by the Gateway Config MO. In step 708, the gateway determines if the status of the "Inform DM Server" flag for the device type in question is true. If the DM gateway determines that the flag is not set to true, the process ends. In contrast, if the DM gateway determines that the flag is set to true, the process proceeds to step 710. In step 710, the DM gateway attempts communication with DM server(s) on behalf of the device, using the proper credentials. In step 712, the DM gateway may update the DM server connectivity attribute for this device in the LAN Device Inventory MO, based on the status of the communication attempt with the DM server(s). Thereafter, the process ends.

Herein, steps 706 and 712 are optional and thus one or more of steps 706 and 712 may be omitted. When one or more of steps 706 and 712 are omitted the process proceeds to the next step.

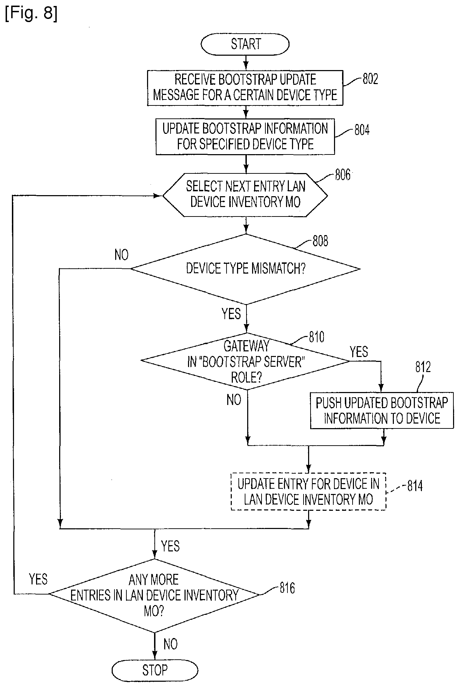

As discussed above, DM Acc Profiles are maintained by one or more MOs for different device types. The algorithm for updating the DM Acc Profile in the Gateway Config MO is described below with reference to FIG. 8

FIG. 8 is a flowchart for a updating the bootstrap information for a certain device type according to an exemplary embodiment of the present invention.

Referring to FIG. 8, the DM gateway receives a bootstrap update message for a certain device type in step 802. In step 804, the DM gateway updates the bootstrap information or the device type specified in the bootstrap update message. In step 806, the DM gateway selects the next entry in the LAN Device Inventory MO. Here, if the immediately previous step is step 804, then the selected entry in the LAN Device Inventory MO is the first entry.

In step 808, the DM gateway scans through the LAN Device Inventory MO, determines if there is a match between the device type for a device in the LAN inventory MO and the device type specified in the bootstrap update message. If the DM gateway determines that there is no match, the process proceeds to step 816, which is described further below. In contrast, if the DM gateway determines that there is a match, the process proceeds to step 810.

In step 810, the DM gateway determines if it is in the Bootstrap Server Role for the device. If the DM gateway determines that it is not in the Bootstrap Server Role for the device, the process proceeds to step 814, which is described further below. In contrast, if the DM gateway determines that it is in the Bootstrap Server Role for the device, the process proceeds to step 812. In step 812, the DM gateway pushes the updated DM bootstrap information to the device. In step 814, the DM gateway may update the entries for the affected devices in the LAN Device Inventory MO. Herein, step 814 is optional and thus step 814 may be omitted. When step 814 is omitted the process proceeds to step 816. In step 816, the DM gateway determines if there is another entry. If the DM gateway determines that there is another entry, the process returns to step 806, otherwise the process ends.

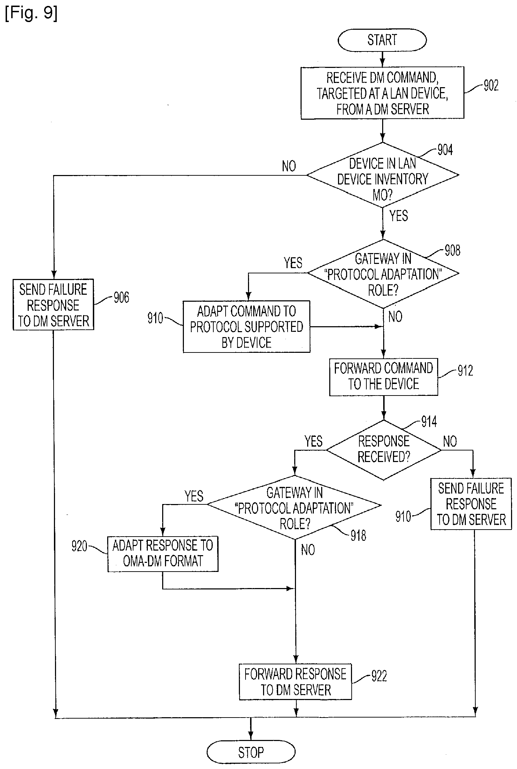

The algorithm for processing DM commands destined for end-user devices, in a case where the DM gateway is in the Proxy Server Role or a Protocol Adaptation Role, is described below with reference to FIG. 9.

FIG. 9 is a flowchart for processing DM commands at a DM gateway that are destined for end-user devices, in a case where the DM gateway is in a Proxy Server Role or a Protocol Adaptation Role, according to an exemplary embodiment of the present invention.

Referring to FIG. 9, the DM gateway receives a DM command, targeted at a LAN device, from a DM server in step 902. In step 904, the DM gateway determines if the targeted device is in the LAN Device Inventory MO. If the DM gateway determines that the targeted device is not in the LAN Device Inventory MO, a failure response is sent to the DM server in step 906. Thereafter, the process ends. In contrast, if the DM gateway determines that the targeted device is in the LAN Device Inventory MO, the process proceeds to step 908.

In step 908, the DM gateway determines if it is in a Protocol Adaptation Role. If the DM gateway determines that it is not in a Protocol Adaptation Role, the process proceeds to step 912, which is described further below. In contrast, if the DM gateway determines that it is in a Protocol Adaptation Role, the DM gateway adapts the DM command to the management protocol natively supported by the device in step 910 and then proceeds to step 912. In step 912, the command is forwarded to the device. In step 914, the DM gateway awaits a response to the forwarded command and determines if the response is received. If a response is not received within a predefined time period, the DM gateway sends a failure response to the DM server in step 916. Thereafter, the process ends. In contrast, if a response is received within a predefined time period, the DM gateway proceeds to step 918.

In step 918, the DM gateway determines if it is in the Protocol Adaption Role. The DM gateway may be in the Protocol Adaption Role when the device does not support OMA-DM. If the DM gateway determines that it is not in the Protocol Adaption Role, the DM gateway proceeds to step 922, which is described below. In contrast, if the DM gateway determines that it is in the Protocol Adaption Role, the DM gateway adapts the response to OMA-DM in step 920 and proceeds to step 922. In step 922, the DM gateway forwards the response back to the DM server. Thereafter, the process ends.

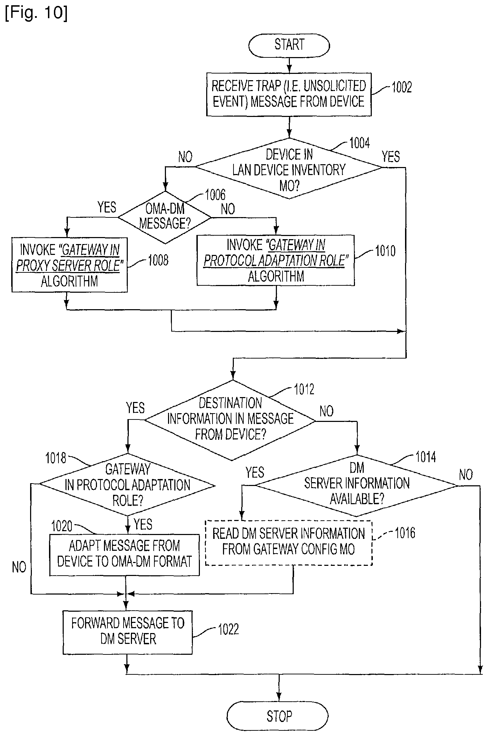

The processing of unsolicited messages (or traps) is described below in FIG. 10.

FIG. 10 is a flowchart for processing trap messages at a DM gateway according to an exemplary embodiment of the present invention.

Referring to FIG. 10, the DM gateway receives a trap message (unsolicited message) for a device in step 1002. In step 1004, the DM gateway determines if the device is currently in the LAN Device Inventory MO. If the DM gateway determines that the device is currently in the LAN Device Inventory MO, the process proceeds to step 1012, which is described further below. In contrast, if the DM gateway determines that the device is not currently in the LAN Device Inventory MO, the process proceeds to step 1006. In step 1006, the DM gateway determines if the trap message is an OMA-DM message. If the DM gateway determines that the trap message is an OMA-DM message, the DM gateway adds the device to the LAN Device Inventory MO and invokes the DM gateway in Proxy Server Role algorithm in step 1008 and proceeds to step 1012. In contrast, if the DM gateway determines that the trap message is not an OMA-DM message, the DM gateway adds the device to the LAN Device Inventory MO and invokes the DM gateway in Protocol Adaption Role algorithm in step 1010 and proceeds to step 1012.

In step 1012, the DM gateway determines if there is destination information (i.e., for a DM server) in the trap message from the device. If the DM gateway determines that there is no destination information in the trap message from the device, the process proceeds to step 1014. In step 1014, the DM gateway attempts to locate the destination information for the trap. If the DM gateway cannot determine the destination information, the process ends. In contrast, if the DM gateway can determine the trap destination information, the DM gateway may read the corresponding DM server information from in the Gateway Config MO in step 1016 and then the process proceeds to step 1022, which is described further below. Herein, step 1016 is optional and thus step 1016 may be omitted. When step 1016 is omitted the process proceeds to step 1022.

Returning to step 1012, if the DM gateway determines that there is destination information in the trap message from the device, the process proceed to step 1018. In step 1018, the DM gateway determines if it is in the Protocol Adaptation Role. If the DM gateway determines that it is not in the Protocol Adaptation Role, the process proceeds to step 1022. In contrast, if the DM gateway determines that it is in the Protocol Adaptation Role, the DM gateway adapts the message from the device into the OMA-DM format in step 1020 and the process proceeds to step 1022. In step 1022, the DM gateway forwards the message to the corresponding DM server. Thereafter, the process ends.

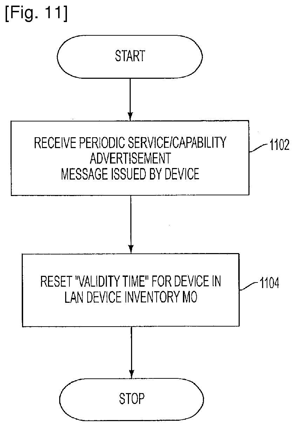

As indentified above, devices may issue service/capability advertisements periodically, and not just upon power-up. An example of receiving a periodic service/ capability advertisement is described below with reference to FIG. 11.

FIG. 11 is a flowchart for processing periodic service/capability messages at a DM gateway according to an exemplary embodiment of the present invention.

Referring to FIG. 11, the DM gateway receives a periodic service/capability message from a device in step 1102. In step 1104, the DM gateway resets a "Validity Time" for the device in the LAN Device Inventory MO. This mechanism avoids lingering entries in the MO as devices fail, run out of battery or simply move away from the jurisdiction of the DM gateway. Thereafter, the process ends.

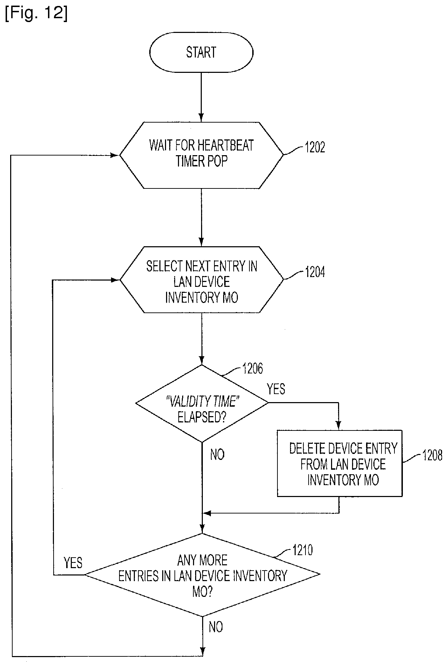

An example of processing a Heartbeat Timeout message at the DM gateway is described below with reference to FIG. 12.

FIG. 12 is a flowchart for processing a Heartbeat Timeout message at a DM gateway according to an exemplary embodiment of the present invention.

Referring to FIG. 12, a Heartbeat Timer elapses in step 1202. In step 1204, the DM gateway selects the next device entry in the LAN Inventory MO. Here, if no device as yet been selected, a first device is selected. In step 1206 the DM gateway determines a "Validity Time" for the selected device has elapsed. If the DM gateway determines that the "Validity Time" for the selected device has not elapsed, the process proceeds to step 1210, which is described further below. In contrast, if the DM gateway determines that the "Validity Time" for the selected device has elapsed, the process proceeds to step 1208. In step 1208, the DM gateway deletes the entry of the selected device from the LAN Inventory MO and the process proceeds to step 1210. In step 1210, the DM gateway determines if there are any more entries in the LAN Inventory MO. If the DM gateway determines that there are more entries in the LAN Inventory MO, the process returns to step 1204. In contrast, if the DM gateway determines that there are no more entries in the LAN Inventory MO, the process returns to step 1202.

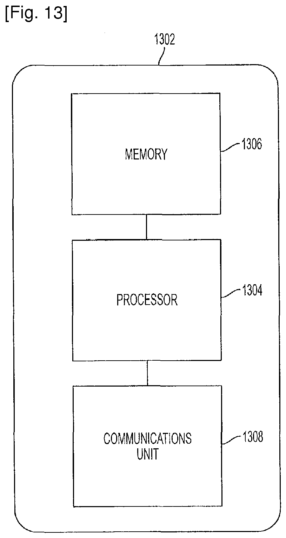

A structure of a DM gateway device according to an exemplary embodiment of the present invention will be described below with reference to FIG. 13.

FIG. 13 is a block diagram of a DM gateway according to an exemplary embodiment of the present invention.

Referring to FIG. 13, the DM gateway 1302 includes a processor 1304, a memory 1306, and a communications unit 1308. The DM gateway 1302 may include any number of additional structural elements. However, a description of additional structural elements of the DM gateway 1302 is omitted for conciseness.

The processor 1304 is used to process general operations of the DM gateway 1302 and may be used to execute code to perform any of the functions/operations/algorithms/roles explicitly or implicitly described herein as being performed by a DM gateway. Further, the processor 1304 may communicate with and/or control the memory 1306 and/or the communications unit 1308. The term "code" may be used herein to represent one or more of executable instructions, operand data, configuration parameters, and other information stored in memory 1306.

The memory 1306 may store code that is processed by the processor 1304 to execute any of the functions/operations/algorithms/roles explicitly or implicitly described herein as being performed by a DM gateway. In addition, one or more of other executable instructions, operand data, configuration parameters, and other information may be stored in the memory 1306. Depending on the exact configuration of the DM gateway 1302, memory 1306 may be volatile (such as Random Access Memory (RAM)), non-volatile (such as Read Only Memory (ROM), flash memory, etc.) or some combination of the two.

The communications unit 1308 transmits and receives data between one or more of a device, a DM server and other entities. The communications unit 1308 may includes any number of transceivers, receivers, and transmitters of any number of types, such as wired, wireless, etc.

Certain aspects of the present invention may also be embodied as computer readable code on a computer readable recording medium. A computer readable recording medium is any data storage device that can store data, which can be thereafter read by a computer system. Examples of the computer readable recording medium include ROM, RAM, Compact Disc (CD)-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the scope of the invention as defined by the appended claims.

## Claims

1. A method for operating a Device Management, DM, gateway (1302) in a communication system including the DM gateway, a DM server (140, 220, 302), and a device (100), the method comprising:
detecting, by the DM gateway (1302), a new manageable device (100);
determining, by the DM gateway (1302), one or more characteristics of the device (100); and
invoking (408, 412, 414), by the DM gateway (1302), an algorithm based on the determined one or more characteristics of the device (100), wherein the DM gateway (1302) operates according to the invoked algorithm, so that the DM server (140, 220, 302) can subsequently manage the device (100), by sending management commands to the device (100), via the DM gateway (1302), and by processing alerts received from the device (100), via the DM gateway (1302), wherein the one or more characteristics of the device (100) comprise at least one of a first characteristic of whether the device (100) is configured for a proxy connection with the DM server (140, 220, 302), and a second characteristic of whether the device (100) is configured for DM gateway bypass.

2. The method of claim 1, wherein the one or more characteristics of the device (100) comprises a characteristic of whether the device supports a DM protocol used by the DM server (140, 220, 302).

3. The method of claim 2, wherein, if it is determined that the device (100) does not support the DM protocol used by the DM server (140, 220, 302), a protocol adaptation algorithm is invoked (408) that causes the DM gateway (1302) to operate as a proxy DM server for the device (100), communicate with the DM server (140, 220, 302) on behalf of the device (100), and perform protocol adaptation between the DM server (140, 220, 302) and the device (100).

4. The method of claim 3, wherein, when the protocol adaptation algorithm is invoked (408), the operations of the DM gateway (1302) comprise:
adding (702) information pertaining to the device (100) to a Local Area Network, LAN, Device Inventory Management Object, MO, and
determining (704) if DM bootstrap information is included in a Gateway Configuration, Config MO.

5. The method of claim 4, wherein, when the protocol adaptation algorithm is invoked (408), the operations of the DM gateway (1302) further comprise:
if the DM bootstrap information is included in the Gateway Config MO, updating (706) a DM Account, Acc, Profile IDentifier, ID, for the device (100) in the LAN Device Inventory MO using the DM bootstrap information included in the Gateway Config MO.

6. The method of claim 4, wherein, when the protocol adaptation algorithm is invoked (408), the operations of the DM gateway (1302) further comprise obtaining a Wide Area Network, WAN, address of the device (100).

7. The method of claim 2, wherein, if it is determined that the device (100) supports the DM protocol used by the DM server (140, 220, 302) and it is determined that the device (100) is configured for the proxy connection with the DM server (140, 220, 302), a proxy server algorithm is invoked (414) that causes the DM gateway (1302) to operate as a proxy DM server for the device (100) and communicate with the DM server (140, 220, 302) on behalf of the device (100).

8. The method of claim 7, wherein, when the proxy server algorithm is invoked (414), the operations of the DM gateway (1302) comprise:
adding (602) information pertaining to the device (100) to a Local Area Network (LAN) Device Inventory Management Object, MO,;
DM bootstrapping (604) the device (100) using an address of the DM gateway (1302);
determining (606) if the received service/capability advertisement message includes DM bootstrap information for the device (100);
if it is determined that the service/capability advertisement message does not include the DM bootstrap information, determining (608) if the DM bootstrap information is included in a Gateway Configuration, Config MO; and
determining (616) if an Inform DM Server flag for the device (100) is set to true in the Gateway Config MO.

9. The method of claim 8, wherein, when the proxy server algorithm is invoked (414), the operations of the DM gateway (1302) further comprise:
if the DM bootstrap information is included in the Gateway Config MO, updating (610) a DM Account, Acc, Profile IDentifier, ID, for the device (100) in the LAN Device Inventory MO using the DM bootstrap information included in the Gateway Config MO.

10. The method of claim 8, wherein, when the proxy server algorithm is invoked (414), the operations of the DM gateway (1302) further comprise:
if it is determined that the service/capability advertisement message contains the DM bootstrap information, creating (612) a new DM Account, Acc, Profile in the Gateway Config MO and updating (614) a DM Acc Profile IDentifier, ID, for the device (100) in the LAN Device Inventory MO using the new DM Acc Profile.

11. The method of claim 8, wherein, when the proxy server algorithm is invoked (414), the operations of the DM gateway (1302) further comprise:
if it is determined that the Inform DM Server flag for the device is set to true, attempting (618) communication with DM server (140, 220, 302) on behalf of device (100) and updating (620) a DM server connectivity attribute for the device (100) in LAN Device Inventory MO.

12. The method of claim 2, wherein, if it is determined that the device (100) supports the DM protocol used by the DM server (140, 220, 302) and it is determined that the device (100) is not configured for the proxy connection with the DM server (140, 220, 302), a bootstrap server algorithm is invoked (412) that causes the DM gateway (1302) to facilitate a connection between the DM server (140, 220, 302) and the device (100).

13. The method of claim 12, wherein, when the bootstrap server algorithm is invoked (412), the operations of the DM gateway (1302) comprise:
obtaining (502) a Wide Area Network (WAN) address of the device (100);
adding (504) information pertaining to the device (100) to a Local Area Network (LAN) Device Inventory Management Object, MO,;
determining (506) if bootstrap information of the device (100) is included in a Gateway Configuration, Config MO; and
if the bootstrap information of the device (100) is included in the Gateway Config MO, transmitting (510) the bootstrap information to the device (100).

14. The method of claim 13, wherein, when the bootstrap server algorithm is invoked (412), the operations of the DM gateway further comprise:
if the bootstrap information of the device (100) is included in the Gateway Config MO, transmitting (510) the WAN address to the device (100); and
if the bootstrap information for the device (100) is not included in the Gateway Config MO, transmitting (512) the WAN address to the device (100).

15. A Device Management, DM, gateway (1302) for operation in a communication system including the DM gateway (1302), a DM server (140, 220, 302), and a device (100), the DM gateway (1302) comprising a computer-readable recording medium storing instructions causing a processor to execute the method of any one of claims 1 to 14.

## Patentansprüche

1. Verfahren zum Betreiben eines Gerätemanagement-, DM, Gateways (1302) in einem Kommunikationssystem, mit dem DM-Gateway, einem DM-Server (140, 220, 302) und einem Gerät (100), wobei das Verfahren enthält:
Erfassen eines neuen verwaltbaren Geräts (100) durch das DM-Gateway (1302);
Bestimmen von einem oder mehreren Merkmalen des Geräts (100) durch das DM-Gateway (1302); und
Aufrufen (408, 412, 414), durch das DM-Gateway (1302), eines Algorithmus auf Grundlage des bzw. der bestimmten einen oder mehreren Merkmale des Geräts (100), wobei das DM-Gateway (1302) dem aufgerufenen Algorithmus entsprechend arbeitet, sodass der DM-Server (140, 220, 302) das Gerät (100) anschließend verwalten kann, indem über das DM-Gateway (1302) Verwaltungsbefehle an das Gerät (100) gesendet werden, und indem über das DM-Gateway (1302) von dem Gerät (100) empfangene Alerts verarbeitet werden, wobei das eine oder die mehreren Merkmale des Geräts (100) mindestens eines von einem ersten Merkmal, ob das Gerät (100) für eine Proxy-Verbindung mit dem DM-Server (140, 220, 302) konfiguriert ist, und einem zweiten Merkmal aufweist bzw. aufweisen, ob das Gerät (100) für eine DM-Gateway-Umgehung konfiguriert ist.

2. Verfahren nach Anspruch 1, wobei das eine oder die mehreren Merkmale des Geräts (100) ein Merkmal aufweist bzw. aufweisen, ob das Gerät ein DM-Protokoll unterstützt, das von dem DM-Server (140, 220, 302) verwendet wird.

3. Verfahren nach Anspruch 2, wobei, wenn bestimmt wird, dass das Gerät (100) das von dem DM-Server (140, 220, 302) verwendete DM-Protokoll nicht unterstützt, ein Protokollanpassungsalgorithmus aufgerufen (408) wird, der veranlasst, dass das DM-Gateway (1302) als ein Proxy-DM-Server für das Gerät (100) arbeitet, mit dem DM-Server (140, 220, 302) für das Gerät (100) kommuniziert und eine Protokollanpassung zwischen dem DM-Server (140, 220, 302) und dem Gerät (100) ausführt.

4. Verfahren nach Anspruch 3, wobei, wenn der Protokollanpassungsalgorithmus aufgerufen (408) wird, die Vorgänge des DM-Gateways (1302) aufweisen:
Hinzufügen (702) von zum Gerät (100) zugehörigen Informationen zu einem Managementobjekt MO eines Geräteinventars eines lokalen Netzwerks, LAN; und
Bestimmen (704), ob DM-Ladeprogramminformationen in einem Gateway-Konfigurations-, Config, MO enthalten sind.

5. Verfahren nach Anspruch 4, wobei, wenn der Protokollanpassungsalgorithmus aufgerufen (408) wird, die Vorgänge des DM-Gateways (1302) ferner aufweisen:
wenn die DM-Bootstrap-Informationen in dem Gateway-Config-MO, enthalten sind, Aktualisieren (706) einer DM-Account-, Acc, Profilkennung
für das Gerät (100) in dem MO des LAN-Geräteinventars unter Verwendung der in dem Gateway-Config-MO enthaltenen DM-Bootstrap-Informationen.

6. Verfahren nach Anspruch 4, wobei, wenn der Protokollanpassungsalgorithmus aufgerufen (408) wird, die Vorgänge des DM-Gateways (1302) ferner ein Erhalten einer Weitverkehrsnetzwerk- WAN, Adresse des Geräts (100) aufweisen.

7. Verfahren nach Anspruch 2, wobei, wenn bestimmt wird, dass das Gerät (100) das von dem DM-Server (140, 220, 302) verwendete DM-Protokoll unterstützt, und bestimmt wird, dass das Gerät (100) für die Proxy-Verbindung mit dem DM-Server (140, 220, 302) konfiguriert ist, ein Proxyserveralgorithmus aufgerufen (414) wird, der veranlasst, dass das DM-Gateway (1302) als ein Proxy-DM-Server für das Gerät (100) arbeitet und mit dem DM-Server (140, 220, 302) für das Gerät (100) kommuniziert.

8. Verfahren nach Anspruch 7, wobei, wenn der Proxyserveralgorithmus aufgerufen (414) wird, die Vorgänge des DM-Gateways (1302) aufweisen:
Hinzufügen (602) von zum Gerät (100) zugehörigen Informationen zu einem Managementobjekt MO eines Geräteinventars eines lokalen Netzwerks, LAN;
DM-Bootstrapping (604) des Geräts (100) unter Verwendung einer Adresse des DM-Gateways (1302);
Bestimmen (606), ob die empfangene Service/Fähigkeitsmitteilungsnachricht DM-Bootstrap-Informationen für das Gerät (100) enthält;
wenn bestimmt wird, dass die Service/Fähigkeitsmitteilungsnachricht die DM-Bootstrap-Informationen nicht enthält, Bestimmen (608), ob die DM-Bootstrap-Informationen in einem Gateway-Konfigurations-,Config, MO enthalten sind; und
Bestimmen (616), ob ein Kennzeichen "DM-Server informieren" für das Gerät (100) in dem Gateway-Config-MO auf "Wahr" gesetzt ist.

9. Verfahren nach Anspruch 8, wobei, wenn der Proxyserveralgorithmus aufgerufen (414) wird, die Vorgänge des DM-Gateways (1302) ferner aufweisen:
wenn die DM-Bootstrap-Informationen in dem Gateway-Config-MO enthalten sind, Aktualisieren (610) einer DM-Account-, Acc, Profilkennung für das Gerät (100) in dem MO des LAN-Geräteinventars unter Verwendung der in dem Gateway-Config-MO enthaltenen DM-Bootstrap-Informationen.

10. Verfahren nach Anspruch 8, wobei, wenn der Proxyserveralgorithmus aufgerufen (414) wird, die Vorgänge des DM-Gateways (1302) ferner aufweisen:
wenn bestimmt wird, dass die Service/Fähigkeitsmitteilungsnachricht die DM-Bootstrap-Informationen enthalten, Erstellen (612) eines neuen DM-Account-, Acc,
Profils in dem Gateway-Config-MO, und Aktualisieren (614) einer DM-Acc-Profilkennung für das Gerät (100) in dem MO des LAN-Geräteinventars unter Verwendung des neuen DM-Acc-Profils.

11. Verfahren nach Anspruch 8, wobei, wenn der Proxyserveralgorithmus aufgerufen (414) wird, die Vorgänge des DM-Gateways (1302) ferner aufweisen:
wenn bestimmt wird, dass das Kennzeichen "DM-Server informieren" für das Gerät auf "Wahr" gesetzt ist, Versuchen (618) einer Kommunikation mit dem DM-Server (140, 220, 302) für das Gerät (100) und Aktualisieren (620) eines DM-Server-Konnektivitätsattributs für das Gerät (100) in dem MO des LAN-Geräteinventars.

12. Verfahren nach Anspruch 2, wobei, wenn bestimmt wird, dass das Gerät (100) das von dem DM-Server (140, 220, 302) verwendete DM-Protokoll unterstützt, und bestimmt wird, dass das Gerät (100) nicht für die Proxy-Verbindung mit dem DM-Server (140, 220, 302) konfiguriert ist, ein Bootstrap-Serveralgorithmus aufgerufen (412) wird, der veranlasst, dass das DM-Gateway (1302) eine Verbindung zwischen dem DM-Server (140, 220, 302) und dem Gerät (100) ermöglicht.

13. Verfahren nach Anspruch 12, wobei, wenn der Bootstrap-Serveralgorithmus aufgerufen (412) wird, die Vorgänge des DM-Gateways (1302) aufweisen:
Erhalten (502) einer Weitverkehrsnetzwerk- (WAN) Adresse des Geräts (100):
Hinzufügen (504) von zum Gerät (100) zugehörigen Informationen zu einem Managementobjekt MO eines Geräteinventars eines lokalen Netzwerks (LAN);
Bestimmen (506), ob Bootstrap-Informationen des Geräts (100) in einem Gateway-Konfigurations-, Config, MO enthalten sind; und
wenn die Bootstrap-Informationen des Geräts (100) in dem Gateway-Config-MO enthalten sind, Übertragen (510) der Bootstrap-Informationen an das Gerät (100).

14. Verfahren nach Anspruch 13, wobei, wenn der Bootstrap-Serveralgorithmus aufgerufen (412) wird, die Vorgänge des DM-Gateways ferner aufweisen:
wenn die Bootstrap-Informationen des Geräts (100) in dem Gateway-Config-MO enthalten sind, Übertragen (510) der WAN-Adresse an das Gerät (100); und
wenn die Bootstrap-Informationen für das Gerät (100) nicht in dem Gateway-Config-MO enthalten sind, Übertragen (512) der WAN-Adresse an das Gerät (100).

15. Gerätemanagement-, DM, Gateway (1302) zum Betrieb in einem Kommunikationssystem mit dem DM-Gateway (1302), einem DM-Server (140, 220, 302) und einer Vorrichtung (100),wobei das DM-Gateway (1302) ein computerlesbares Aufzeichnungsmedium aufweist, das Anweisungen speichert, die einen Prozessor veranlassen, das Verfahren nach einem der Ansprüche 1 bis 14 auszuführen.

## Revendications

1. Méthode d'utilisation d'une passerelle de gestion de périphérique, DM, (1302) dans un système de communication comprenant la passerelle DM, un serveur DM (140, 220, 302), et un dispositif (100), la méthode comprenant :
la détection, par la passerelle DM (1302), d'un nouveau dispositif gérable (100) ;
la détermination, par la passerelle DM (1302), d'une ou plusieurs caractéristiques du dispositif (100) ; et
l'invocation (408, 412, 414), par la passerelle DM (1302), d'un algorithme basé sur la caractéristique déterminée d'une ou plusieurs caractéristiques du dispositif (100), la passerelle DM (1302) fonctionnant conformément à l'algorithme invoqué, de sorte que le serveur DM (140, 220, 302) puisse, par la suite, gérer le dispositif (100) en envoyant des commandes de gestion au dispositif (100), par le biais de la passerelle DM (1302), et en assurant le traitement d'alertes reçues au dispositif (100), par le biais de la passerelle DM (1302), l'une ou plusieurs caractéristiques du dispositif (100) comprenant au moins une d'une première caractéristique pour établir si le dispositif (100) est configuré pour une connexion de mandataire avec le serveur DM (140, 220, 302), et d'une deuxième caractéristique pour établir si le dispositif (100) est configuré pour un contournement de passerelle DM.

2. Méthode selon la revendication 1, l'une ou plusieurs caractéristiques du dispositif (100) comprenant une caractéristique pour établir si le dispositif supporte un protocole DM utilisé par le serveur DM (140, 220, 302).

3. Méthode selon la revendication 2, dans laquelle, s'il est établi que le dispositif (100) ne supporte pas le protocole DM utilisé par le serveur DM (140, 220, 302), un algorithme d'adaptation de protocole est invoqué (408) pour entraîner le fonctionnement de la passerelle DM (1302) en tant que serveur DM mandataire pour le dispositif (100), communiquer avec le serveur DM (140, 220, 302) pour le compte du dispositif (100), et effectuer une adaptation de protocole entre le serveur DM (140, 220, 302) et le dispositif (100).

4. Méthode selon la revendication 3, dans laquelle, lorsque l'on invoque l'algorithme d'adaptation de protocole (408), les opérations de la passerelle DM (1302) comprennent :
l'adjonction d'informations (702) se rapportant au dispositif (100) dans un objet de gestion d'inventaire de périphériques, MO, de réseau local, LAN ; et
la détermination (704) que des informations d'amorçage DM sont incorporées dans une configuration de la passerelle, Config MO.

5. Méthode selon la revendication 4, dans laquelle, lorsque l'on invoque l'algorithme d'adaptation de protocole (408), les opérations de la passerelle DM (1302) comprennent en outre : si les informations d'amorçage DM sont incorporées dans une configuration de la passerelle, Config MO, la mise à jour (706) d'un identifiant de profil de compte DM, Acc, pour le dispositif (100) dans l'inventaire de périphériques MO du LAN, en utilisant les informations d'amorçage DM comprises dans Config MO de la passerelle.

6. Méthode selon la revendication 4, dans laquelle, lorsque l'on invoque l'algorithme d'adaptation de protocole (408), les opérations de la passerelle DM (1302) comprennent en outre l'obtention d'une adresse de réseau étendu, WAN, du dispositif (100).

7. Méthode selon la revendication 2, dans laquelle s'il est établi que le dispositif (100) supporte le protocole DM utilisé par le serveur DM (140, 220, 302), et s'il est établi que le dispositif (100) est configuré pour la connexion de mandataire avec le serveur DM (140, 220, 302), on invoque un algorithme de serveur mandataire (414) sous l'effet duquel la passerelle DM (1302) fonctionne comme un serveur mandataire DM pour le dispositif (100), et communique avec le serveur DM (140, 220, 302) pour le compte du dispositif (100).

8. Méthode selon la revendication 7, dans laquelle lorsque l'on invoque un algorithme de serveur mandataire (414), les opérations de la passerelle DM (1302) comprennent :
l'adjonction (602) d'informations se rapportant au dispositif (100) dans un objet de gestion d'inventaire de périphériques, MO, de réseau local, LAN ;
l'amorçage (604), par la DM, du dispositif (100) en utilisant une adresse de la passerelle DM (1302) ;
la détermination (606) si le message d'annonce de service/capacité reçu comprend des informations d'amorçage DM pour le dispositif (100) ;
s'il est établi que le message d'annonce de service/capacité ne comprend pas les informations d'amorçage DM, la détermination (608) si les informations d'amorçage DM sont incorporées dans une configuration de passerelle, Config MO ; et
la détermination (616) si un indicateur de serveur Inform DM pour le dispositif (100) est réglé à « vrai » dans la Config MO de la passerelle.

9. Méthode selon la revendication 8, dans laquelle lorsque l'on invoque un algorithme de serveur mandataire (414), les opérations de la passerelle DM (1302) comprennent en outre :
si les informations d'amorçage DM sont incorporées dans la Config MO de la passerelle, la mise à jour (610) d'un identifiant de profil de compte DM, Acc, pour le dispositif (100) dans l'inventaire de périphériques MO du LAN, en utilisant les informations d'amorçage DM comprises dans Config MO de la passerelle.

10. Méthode selon la revendication 8, dans laquelle lorsque l'on invoque un algorithme de serveur mandataire (414), les opérations de la passerelle DM (1302) comprennent en outre :
s'il est établi que le message d'annonce de service/capacité reçu contient les informations d'amorçage DM, la création (612) d'un nouveau profil de compte DM, Acc, dans la Config MO de la passerelle, et la mise à jour (614) d'un identifiant de profil Acc de compte DM pour le dispositif (100) dans l'inventaire de périphériques MO du LAN, en utilisant le nouveau profil Acc de DM.

11. Méthode selon la revendication 8, dans laquelle lorsque l'on invoque un algorithme de serveur mandataire (414), les opérations de la passerelle DM (1302) comprennent en outre :
s'il est établi que l'indicateur de serveur Inform DM pour le dispositif est réglé à « vrai », une tentative (618) de communication avec le serveur DM (140, 220, 302) pour le compte du dispositif (100), et la mise à jour (620) d'un attribut de connectivité du serveur DM pour le dispositif (100) dans l'inventaire de périphériques MO du LAN.

12. Méthode selon la revendication 2, dans laquelle s'il est établi que le dispositif (100) supporte le protocole DM utilisé par le serveur DM (140, 220, 302), et s'il est établi que le dispositif (100) n'est pas configuré pour la connexion mandataire avec le serveur DM (140, 220, 302), on invoque un algorithme de serveur d'amorçage (412) causant la facilitation, par la passerelle DM (1302), d'une connexion entre le serveur DM (140, 220, 302) et pour le dispositif (100).

13. Méthode selon la revendication 12, dans laquelle lorsque l'on invoque l'algorithme de serveur d'amorçage (412), les opérations de la passerelle DM (1302) comprennent :
l'obtention (502) d'une adresse de réseau étendu, WAN, du dispositif (100) ;
l'adjonction (504) d'informations se rapportant au dispositif (100) dans un objet de gestion d'inventaire de périphériques, MO, de réseau local, LAN ;
la détermination (506) si les informations d'amorçage du dispositif (100) sont incorporées dans une configuration de passerelle, Config MO ; et
si les informations d'amorçage du dispositif (100) sont incorporées dans Config MO de la passerelle, la transmission (510) des informations d'amorçage au dispositif (100).

14. Méthode selon la revendication 13, dans laquelle lorsque l'on invoque l'algorithme de serveur d'amorçage (412), les opérations de la passerelle DM comprennent en outre :
si les informations d'amorçage du dispositif (100) sont incorporées dans Config MO de la passerelle, la transmission (510) de l'adresse du WAN au dispositif (100) ; et
si les informations d'amorçage pour le dispositif (100) ne sont pas incorporées dans Config MO de la passerelle, la transmission (512) de l'adresse du WAN au dispositif (100).

15. Passerelle de gestion de périphérique, DM (1302) pour l'utilisation dans un système de communication comprenant la passerelle DM (1302), un serveur DM (140, 220, 302), et un dispositif (100), la passerelle DM (1302) comprenant un support d'enregistrement lisible par ordinateur, causant l'exécution, par un processeur, de la méthode d'une quelconque des revendications 1 à 14.
